# EUROPEAN PATENT SPECIFICATION

(11) **EP 3 640 057 B1**
(45) Date of publication and mention of the grant of the patent: **27.09.2023**
(21) Application number: 18818299.2
(22) Date of filing: 25.04.2018
(51) Int. Cl.: B60C 11/01, B60C 13/00, B60C 13/02

(54) **TIRE**
REIFEN
PNEUMATIQUE

(30) Priority: 14.06.2017 JP 2017116854
(43) Date of publication of application: 22.04.2020
(73) Proprietor: Bridgestone Corporation, Tokyo 104-8340 (JP)
(72) Inventor: HAYASHI, Shintaro, Tokyo 104-8340 (JP)
(74) Representative: Marks & Clerk LLP
(86) International application number: PCT/JP2018/016807
(87) International publication number: WO 2018/230166

(56) References cited:
- EP-A1- 2 474 427
- EP-A1- 2 740 613
- WO-A1-2013/018800
- JP-A- 2002 205 514
- JP-A- 2010 132 045
- JP-A- 2010 132 045
- JP-A- 2011 068 334
- JP-A- 2013 119 277
- US-A- 4 152 186

## Description

### TECHNICAL FIELD

The present invention relates to a tire.

### BACKGROUND

With performance advancement of vehicles in recent years, the proportion of noise caused by tires during load rolling to noise generated from running automobiles has increased, and reduction of such noise has been required. A typical example of such noise is noise caused by vibration of a tire.

For example, noise caused by vibration of a tire is as follows: When a tread portion of a tire vibrates due to upward thrust from irregularities of a road surface or the like, the vibration propagates to the vehicle body via the wheel and the suspension, and is perceived by an occupant as noise. Moreover, the vibration of the tread portion may directly cause the air to vibrate, which is perceived by the occupant as noise.

For example, PTL 1 discloses, based on findings that vibration of a buttress portion of a tire due to irregularities of a road surface contributes to noise, a technique of forming, in the buttress portion, a recessed shoulder region having a predetermined width and extending along the tire circumferential direction. This structure is intended to keep the buttress portion of the tire from coming into contact with the irregularities of the road surface to thus suppress vibration of the buttress portion. EP2740613A1 discloses a tire with a buttress portion comprising two circumferential rows of indents, with the buttress portion being arranged between a tread portion and a sidewall portion.

Attention is also drawn to the disclosures of EP2474427A1, JP2010-132045A and US4152186A.

### CITATION LIST

### Patent Literature

PTL 1: JP 2011-068334 A

### SUMMARY

### (Technical Problem)

With the technique disclosed in PTL 1, vibration around the buttress portion can be prevented. With regard to vibration of the tread portion, however, there is still room for improvement. Given the increasing interest in and demand for comfort during vehicle running in recent years, it is desirable to further reduce noise caused by vibration of the tread.

It could therefore be helpful to provide a tire that further reduces noise caused by vibration of the tire and in particular vibration of the tread portion of the tire.

### (Solution to Problem)

(1) A tire according to the present invention is a tire comprising a buttress portion between a tread portion and a sidewall portion thereof, wherein a ridge line portion extending in a tire radial direction through at least one bending point on a surface of the buttress portion and a valley line portion extending parallel to the ridge line portion at a spacing from the ridge line portion in a tire circumferential direction and located inward from the surface of the buttress portion in a normal direction of the surface, the ridge line portion and the valley line portion alternately arranged in the tire circumferential direction, a total number of the ridge line portion and the valley line portion being three or more, and a first slanting line portion connects the bending point of the ridge line portion and a bending point of the valley line portion on a same circumference, and a second slanting line portion connects the ridge line portion and the valley line portion in parallel with the first slanting line portion at each of a position away from the first slanting line portion outward in the tire radial direction and a position away from the first slanting line portion inward in the tire radial direction.

Herein, the "tread portion" denotes the region that comes into contact with the road surface when the tire attached to a rim and filled to a predetermined internal pressure rolls in a state of being placed under a load corresponding to 70 % of a maximum load. That is, the "tread portion" denotes the region between the tread ground contact edges around the tire circumference.

Herein, the "buttress portion" denotes the region extending outward in the tire width direction from the tire widthwise edge of the tread portion, i.e. the region from the tread ground contact edge to the tread edge. The "tread edge" is a fitting portion between a tread mold and a side mold, which extends in the tire circumferential direction. That is, the "tread edge" in a product tire typically corresponds to the position of irregularities (e.g. a step or a ridge) at the boundary between the tread mold and the side mold extending in the tire circumferential direction.

The "rim" is an approved rim ("measuring rim" in ETRTO Standards Manual, "design rim" in TRA Year Book) in applicable size that is described or will be described in the future in an effective industrial standard in areas where tires are produced or used, such as JATMA (Japan Automobile Tyre Manufacturers Association) Year Book in Japan, ETRTO (European Tyre and Rim Technical Organisation) Standards Manual in Europe, or TRA (Tire and Rim Association, Inc.) Year Book in the United States (The "rim" thus includes not only current size but also a size that may be included in the industrial standard in the future. An example of the "size that will be described in the future" is the size described as "future developments" in ETRTO Standards Manual 2013). In the case of a size not described in the industrial standard, the "rim" refers to a rim whose width corresponds to the bead width of the tire.

The "predetermined internal pressure" is the air pressure (maximum air pressure) corresponding to the maximum load capability of a single wheel in applicable size/ply rating that is described in JATMA Year Book, etc. In the case of a size not described in the aforementioned industrial standards, the "predetermined internal pressure" denotes the air pressure (maximum air pressure) corresponding to the maximum load capability defined for each vehicle on which the tire is to be mounted. The "maximum load" is the load corresponding to the maximum load capability.

The "air" mentioned here may be substituted by, for example, inert gas such as nitrogen gas.

### (Advantageous Effect)

It is thus possible to provide a tire that further reduces noise caused by vibration of a tread portion.

### BRIEF DESCRIPTION OF THE DRAWINGS

In the accompanying drawings:
FIG. 1 is a perspective cross-sectional view illustrating part of a tire according to one of the embodiments of the present invention;
FIG. 2 is a developed view illustrating part of a buttress portion of the tire illustrated in FIG. 1;
FIG. 3 is a perspective view illustrating part of the buttress portion illustrated in FIG. 2;
FIG. 4 is a developed view illustrating part of a buttress portion of a tire according to another one of the embodiments of the present invention;
FIG. 5 is a perspective view illustrating part of the buttress portion illustrated in FIG. 4;
FIG. 6A is a developed view illustrating part of a buttress portion of Comparative Example tire 2; and
FIG. 6B is a developed view illustrating part of a buttress portion of Comparative Example tire 3.

### DETAILED DESCRIPTION

Embodiments of a tire according to the present invention will be described below, with reference to the drawings.

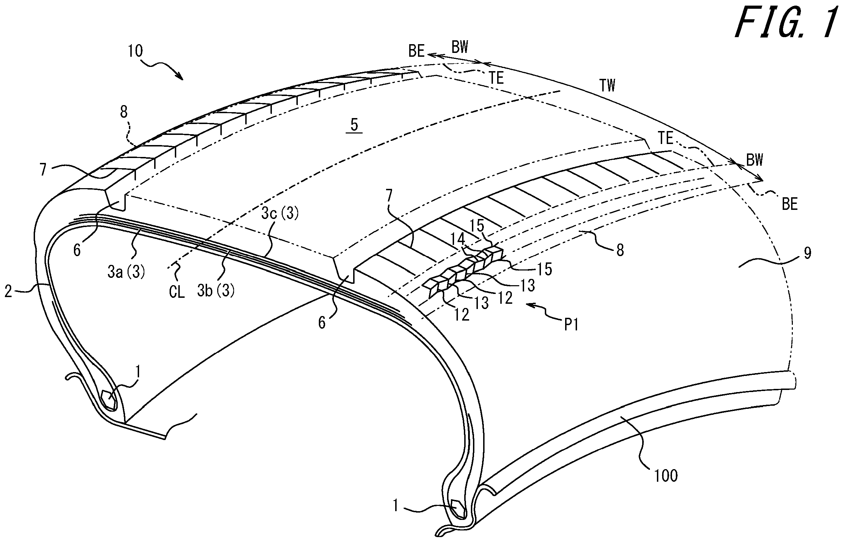

FIG. 1 is a perspective cross-sectional view illustrating part of a tire 10 according to one of the embodiments of the present invention. A buttress portion 8 from the tire widthwise outer side of a tread portion 5 (i.e. the tire widthwise outer side of a tread ground contact edge TE) to the tire radial outer edge of a sidewall portion 9 in the tire 10 has an annular recess P1 of a predetermined shape. In the present invention, the recess P1 may be formed continuously or intermittently.

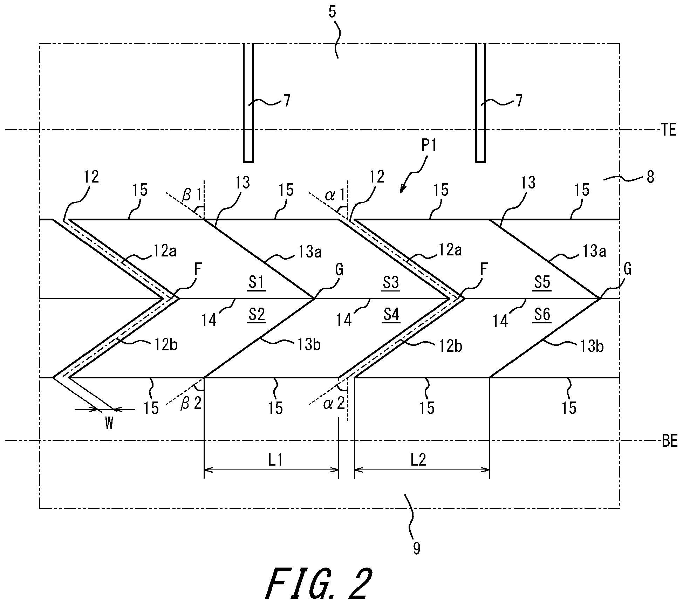

FIG. 2 is a developed view illustrating part of the buttress portion 8 of the tire 10 illustrated in FIG. 1. In the buttress portion 8, a ridge line portion 12 extending in the tire radial direction through at least one bending point (one bending point in this embodiment) F on the surface of the buttress portion 8 and a valley line portion 13 extending parallel to the ridge line portion 12 at a spacing from the ridge line portion 12 in the tire circumferential direction and located inward from the surface of the buttress portion 8 in the normal direction of the surface (i.e. the direction perpendicular to the paper surface of the drawing). The ridge line portion 12 and the valley line portion 13 are alternately arranged in the tire circumferential direction (at regular spacing in this embodiment). The total number of these line portions is three or more. FIG. 2 illustrates four line portions of a plurality of ridge line portions 12 and valley line portions 13 formed in the buttress portion 8 of the tire 10.

The ridge line portion 12 in this embodiment is made up of a first ridge line portion 12a extending outward in the tire radial direction from the bending point F and a second ridge line portion 12b extending inward in the tire radial direction from the same bending point F. The first ridge line portion 12a and the second ridge line portion 12b have the same length, and have the same inclination angle with respect to the tire circumferential direction.

The valley line portion 13 in this embodiment extends in the tire radial direction through at least one bending point (one bending point in this embodiment) G, and is made up of a first valley line portion 13a extending outward in the tire radial direction from the bending point G and a second valley line portion 13b extending inward in the tire radial direction from the same bending point G. The first valley line portion 13a and the second valley line portion 13b have the same length, and have the same inclination angle with respect to the tire circumferential direction.

The ridge line portion 12 and the valley line portion 13 in this embodiment are parallel to each other, and the centerline of the ridge line portion 12 and the valley line portion 13 have the same shape.

The buttress portion 8 in this embodiment also has a slanting line portion (first slanting line portion 14) connecting the bending point F of the ridge line portion 12 and the bending point G of the valley line portion 13 on the same circumference, and a slanting line portion (second slanting line portion 15) connecting the ridge line portion 12 and the valley line portion 13 in parallel with the first slanting line portion 14 at each of a position away from the first slanting line portion 14 outward in the tire radial direction and a position away from the first slanting line portion 14 inward in the tire radial direction (both end positions of each of the ridge line portion 12 and the valley line portion 13 in this embodiment). The first slanting line portion 14 and the second slanting line portion 15 are parallel to each other, and are linear in a developed view in FIG. 2.

Thus, in the buttress portion 8 in this embodiment, the ridge line portion 12 extending in the tire radial direction on the surface of the buttress portion 8, the valley line portion 13 extending in the tire radial direction inward from the surface of the buttress portion 8 in the normal direction of the surface, the first slanting line portion 14 connecting the bending point F of the ridge line portion 12 and the bending point G of the valley line portion 13 on the same circumference, and the second slanting line portion 15 connecting the ridge line portion 12 and the valley line portion 13 in parallel with the first slanting line portion 14 at both end positions of each of the ridge line portion 12 and the valley line portion 13 define at least four slopes S (six slopes S1 to S6 are illustrated in FIG. 2).

The slopes S1 to S6 are each a slope connecting the ridge line portion 12 and the valley line portion 13 inward from the ridge line portion 12 in the normal direction of the surface of the buttress portion 8. Accordingly, the slopes S1 to S6 are inclined with respect to the surface of the buttress portion 8 from the ridge line portion 12 toward the valley line portion 13 so that its depth from the surface of the buttress portion 8 increases gradually.

In this embodiment, the ridge line portion 12 and the valley line portion 13 are parallel to each other, and the first slanting line portion 14 and the second slanting line portion 15 are parallel to each other, as mentioned above. Therefore, the at least four slopes S (the slopes S1 to S6 in FIG. 2) are each a parallelogram.

In this embodiment, the ridge line portion 12 and the valley line portion 13 are arranged at regular spacing in the tire circumferential direction, and the first slanting line portion 14 and the second slanting line portion 15 are arranged at regular spacing in the tire radial direction. Therefore, the at least four slopes S (the slopes S1 to S6 in FIG. 2) are congruent.

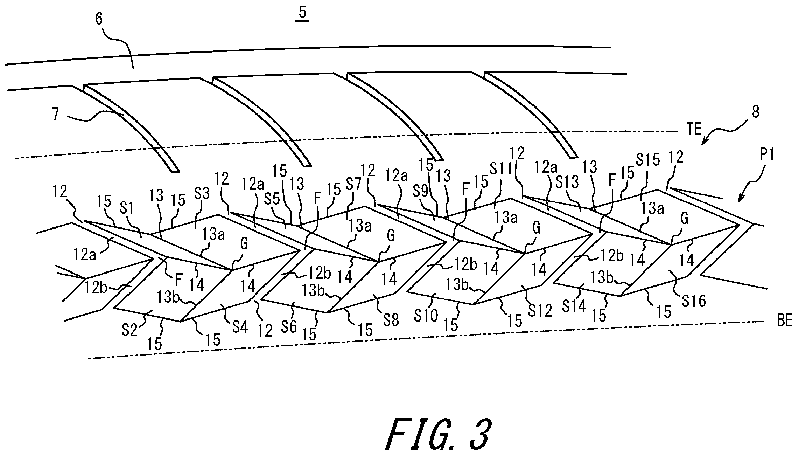

FIG. 3 is a perspective view of the buttress portion 8 in FIG. 2. As illustrated in FIG. 3, each pair of slopes S adjacent in the tire radial direction with the first slanting line portion 14 therebetween, i.e. the slopes S1 and S2, the slopes S3 and S4, ..., and the slopes S15 and S16, form a peak surface or a valley surface. Specifically, on one side in the tire circumferential direction (the left side in the drawing) where the angle between the first ridge line portion 12a and the second ridge line portion 12b extending with the bending point F of the ridge line portion 12 therebetween is less than 180°, for example, the slopes S3 and S4 adjacent in the tire radial direction with the first slanting line portion 14 therebetween form a valley surface that is recessed inward in the normal direction of the first slanting line portion 14. On the other side in the tire circumferential direction (the right side in the drawing) where the angle between the first ridge line portion 12a and the second ridge line portion 12b extending with the bending point F of the ridge line portion 12 therebetween is more than 180°, the slopes S5 and S6 adjacent in the tire radial direction with the first slanting line portion 14 therebetween form a peak surface that protrudes outward in the normal direction of the first slanting line portion 14.

Likewise, on one side in the tire circumferential direction (the left side in the drawing) where the angle between the first valley line portion 13a and the second valley line portion 13b extending with the bending point G of the valley line portion 13 therebetween is less than 180°, the slopes S5 and S6 adjacent in the tire radial direction with the first slanting line portion 14 therebetween form a peak surface that protrudes outward in the normal direction of the first slanting line portion 14. On the other side in the tire circumferential direction (the right side in the drawing) where the angle between the first valley line portion 13a and the second valley line portion 13b extending with the bending point G of the valley line portion 13 therebetween is more than 180°, the slopes S7 and S8 adjacent in the tire radial direction with the first slanting line portion 14 therebetween form a valley surface that is recessed inward in the normal direction of the first slanting line portion 14.

Herein, the normal direction of the first slanting line portion 14 denotes the normal direction of a plane that includes the first slanting line portion 14 and forms the same angle with each of two slopes (e.g. the slopes S3 and S4) adjacent in the tire radial direction with the first slanting line portion 14 therebetween.

The slopes S 1 to S16 in FIG. 3 are inclined with respect to the surface of the buttress portion 8 from the ridge line portion 12 toward the valley line portion 13 so that its depth from the surface of the buttress portion 8 increases gradually, as mentioned above. Therefore, the peak surface and the valley surface are equally inclined with respect to the surface of the buttress portion 8 at the inclination angle of the first slanting line portion 14 with respect to the surface of the buttress portion 8.

Thus, in the buttress portion 8 in this embodiment, the peak surface and the valley surface having the foregoing properties alternate in the tire circumferential direction through the ridge line portion 12 and the valley line portion 13.

With this structure, deformation of the buttress portion 8 in the tire radial direction is allowed through the ridge line portion 12 and the valley line portion 13 each extending in the tire radial direction through at least one bending point F or G, whereas deformation of the buttress portion 8 in the tire circumferential direction is suppressed because such ridge line portion 12 and valley line portion 13 are not formed in the tire circumferential direction. The resultant cushion effect of the buttress portion 8 can attenuate vibration of the tread portion 5. Consequently, propagation of vibration of the tread portion 5 to the sidewall portion 9, the wheel, the suspension, and the vehicle body is prevented, so that noise perceived by an occupant through the vehicle body is reduced. Moreover, propagation of vibration of the tread portion 5 to the air is also reduced, so that noise perceived by the occupant through direct vibration of the air is reduced.

Thus, with this structure, noise caused by vibration of the tread portion 5 can be reduced.

With this structure, deformation of the buttress portion 8 in the tire radial direction is allowed, whereas deformation of the buttress portion 8 in the tire circumferential direction is suppressed. This improves the driving and braking performance of the tire.

In particular, in a loaded state, the buttress portion 8 is subjected to a force in a direction in which the inclination angle of the first ridge line portion 12a and the second ridge line portion 12b of the ridge line portion 12 and the first valley line portion 13a and the second valley line portion 13b of the valley line portion 13 with respect to the tire circumferential direction decreases, and the rigidity in the tire circumferential direction in the recess P1 increases. This further suppresses deformation of the buttress portion 8 in the tire circumferential direction, and thus prevents distortion of the buttress portion 8 during vehicle running.

In terms of suppressing deformation of the buttress portion 8 in the tire circumferential direction more sufficiently to further ensure the foregoing multiple effects, the tire circumferential width W (see FIG. 2) of the ridge line portion 12 is preferably 1.0 mm or more.

Moreover, with this structure, tread strain due to out-of-plane bending deformation during tire ground contact can be alleviated, and thus the wear resistance performance of the tread can be improved.

During vehicle running, out-of-plane bending deformation in the tire radial direction occurs around the buttress portion, which causes the tread to wear. By providing the foregoing structure in the buttress portion 8, however, tread strain due to out-of-plane bending deformation around the buttress portion is alleviated, with it being possible to suppress tread wear.

Moreover, with this structure, the foregoing peak surface and valley surface alternate in the tire circumferential direction on the same circumference around the tire axis, so that crack growth at the surface of the buttress portion 8 can be suppressed.

Cracks at the surface of the buttress portion are usually induced by compressive and tensile strain in the tire radial direction during load rolling of the tire, insufficient air pressure or excessive cleaning or wax coating of the tire, exposure to ultraviolet light or ozone, etc., and particularly tend to occur along a valley line formed at the surface of the buttress portion.

With the foregoing structure, however, each line defining the valley bottom of the valley surface formed by two slopes adjacent in the tire radial direction with the first slanting line portion 14 therebetween is intermittent in the tire circumferential direction, and accordingly crack growth in the tire circumferential direction at the surface of the buttress portion 8 can be suppressed. This effect is advantageous not only in terms of preventing a failure of the tire caused by cracks at the surface of the buttress portion 8 but also in terms of maintaining the appearance of the tire.

In terms of further ensuring the foregoing multiple effects, the depth of the valley line portion 13 is preferably 0.2 mm or more and 1.0 mm or less. If the depth of the valley line portion 13 is 0.2 mm or more, deformation of the buttress portion 8 in the tire radial direction can be allowed favorably. If the depth of the valley line portion 13 is 1.0 mm or less, an excessive decrease of the rigidity of the buttress portion 8 can be prevented. The depth of the valley line portion 13 herein is the distance from the surface of the buttress portion 8 to the valley line portion 13 along the normal direction of the surface of the buttress portion 8.

In terms of further ensuring the foregoing multiple effects, the clearance distance between the ridge line portion 12 and the valley line portion 13 is preferably 3 mm or more and 10 mm or less, and the clearance distance between the first slanting line portion 14 and the second slanting line portion 15 is preferably 3 mm or more and 9 mm or less.

Preferably, in the tire 10 according to this embodiment, the ridge line portion 12 and the valley line portion 13 respectively have one bending point F and one bending point G, and the distance between the slanting line portions (the first slanting line portion 14 and the second slanting line portion 15 in this embodiment) is equal.

With this structure, deformation of the buttress portion 8 in the tire radial direction is allowed more favorably, so that noise caused by vibration of the tread portion can be further reduced, and the crack growth suppression effect, the driving and braking performance improving effect, and the wear resistance performance improving effect can be further ensured.

Herein, the "distance between the slanting line portions" denotes the shortest distance between the slanting line portions.

Preferably, in the tire 10 according to this embodiment, at least four parallelogram-shaped slopes (the plurality of slopes S1 to S 16 in this embodiment) are defined by the ridge line portion 12, the valley line portion 13, and the slanting line portions (the first slanting line portion 14 and the second slanting line portion 15 in this embodiment).

With this structure, deformation of the buttress portion 8 in the tire radial direction is allowed more favorably than in the case where the slopes are not parallelograms, so that noise caused by vibration of the tread portion 5 can be further reduced, and the crack growth suppression effect, the driving and braking performance improving effect, and the wear resistance performance improving effect can be further ensured.

Preferably, in the tire 10 according to this embodiment, the four slopes (the plurality of slopes S1 to S16 in this embodiment) are congruent.

With this structure, deformation of the buttress portion 8 in the tire radial direction is allowed more favorably than in the case where the slopes S are not congruent, so that noise caused by vibration of the tread portion can be further reduced, and the crack growth suppression effect, the driving and braking performance improving effect, and the wear resistance performance improving effect can be further ensured.

Preferably, in the tire 10 according to this embodiment, the four slopes (the plurality of slopes S1 to S16 in this embodiment) have tire circumferential lengths that differ between one side of the ridge line portion 12 or valley line portion 13 in the tire circumferential direction and the other side of the ridge line portion 12 or valley line portion 13 in the tire circumferential direction, and the ratio of the tire circumferential lengths is 0.7 or more and 1.3 or less.

With reference to FIG. 2, for example, it is preferable that the tire circumferential length L1 of the slope S4 on one side of the ridge line portion 12 in the tire circumferential direction and the tire circumferential length L2 of the slope S6 on the other side of the ridge line portion 12 in the tire circumferential direction are different, and the ratio L1/L2 or the ratio L2/L1 is in the foregoing range.

With this structure, various design patterns can be formed in the buttress portion 8, while ensuring favorable deformation of the buttress portion 8 in the tire radial direction.

Preferably, in the tire 10 according to this embodiment, the inclination angle of the slanting line portions (the first slanting line portion 14 and the second slanting line portion 15 in this embodiment) with respect to the tire circumferential direction is 10° or less.

With this structure, deformation of the buttress portion 8 in the tire circumferential direction is further suppressed, and distortion of the buttress portion 8 is further prevented. This further enhances the driving and braking performance of the tire.

In the case where the inclination angle of the slanting line portions (the first slanting line portion 14 and the second slanting line portion 15 in this embodiment) with respect to the tire circumferential direction changes, the maximum value is taken to be the inclination angle of the slanting line portions with respect to the tire circumferential direction.

Preferably, in the tire 10 according to this embodiment, the inclination angle (angles α1 and α2 and angles β1 and β2 in FIG. 2 in this embodiment) of the ridge line portion 12 and the valley line portion 13 with respect to the tire radial direction is 45° or more and 80° or less.

If the inclination angle is 45° or more, deformation of the buttress 8 in the tire radial direction is favorable, so that noise caused by vibration of the tire can be further reduced. If the inclination angle is 80° or less, deformation of the buttress portion 8 in the tire circumferential direction is further suppressed, and distortion of the buttress portion 8 is further prevented. This further enhances the driving and braking performance of the tire.

From the same perspective, the inclination angle is further preferably 55° or more and 72° or less.

In the case where the inclination angle (angle α1) of the first ridge line portion 12a of the ridge line portion 12 with respect to the tire radial direction and the angle (angle α2) of the second ridge line portion 12b of the ridge line portion 12 with respect to the tire radial direction are different, the inclination angles are each preferably in the foregoing numerical range.

Likewise, in the case where the inclination angle (angle β 1) of the first valley line portion 13a of the valley line portion 13 with respect to the tire radial direction and the inclination angle (angle β2) of the second valley line portion 13b of the valley line portion 13 with respect to the tire radial direction are different, the inclination angles are each preferably in the foregoing numerical range.

Preferably, in the tire 10 according to this embodiment, the recess P1 is formed annularly around the circumference of the buttress portion 8.

With this structure, deformation of the buttress portion 8 in the tire radial direction is ensured on the whole tire circumference, and accordingly noise caused by vibration of the tread portion 5 can be further reduced.

Moreover, deformation of the buttress portion 8 in the tire circumferential direction is further suppressed, and distortion of the buttress portion 8 is further prevented. This further enhances the driving and braking performance of the tire.

In the case where the recess P1 is formed only in the buttress portion 8 on one side, the tire is preferably installed on the vehicle so that the recess P1 is located on the inner side.

The buttress portion 8 on the inner side in the vehicle-installed state is closer to the vehicle body than the buttress portion 8 on the outer side in the vehicle-installed state, and also the rigidity of the wheel is lower on the inner side in the vehicle-installed state than on the outer side in the vehicle-installed state. Due to such circumstances, the buttress portion 8 on the inner side in the vehicle-installed state vibrates more easily. By forming the recess P1 in the buttress portion 8 on the inner side in the vehicle-installed state, noise caused by vibration of the tread portion 5 can be reduced more effectively.

In terms of further reducing noise caused by vibration of the tread portion, the recess P1 is preferably formed in both buttresses 8.

Preferably, in the tire 10 according to this embodiment, the proportion of the area of the recess P1 to the surface area of the buttress portion 8 is 50 % or more.

With this structure, quietness can be further improved.

The surface area of the buttress portion 8 and the area of the recess P1 are measured in a developed view of the buttress portion 8.

In the perspective view in FIG. 3, a smooth slope connects the valley line portion 13 at the depth position and the surface of the buttress portion 8 on the tire radial outer side of the second slanting line portion 15 on the tread edge TE side, although not illustrated because it is a curve. The same applies to the tire radial inner side of the second slanting line portion 15 on the buttress end BE side.

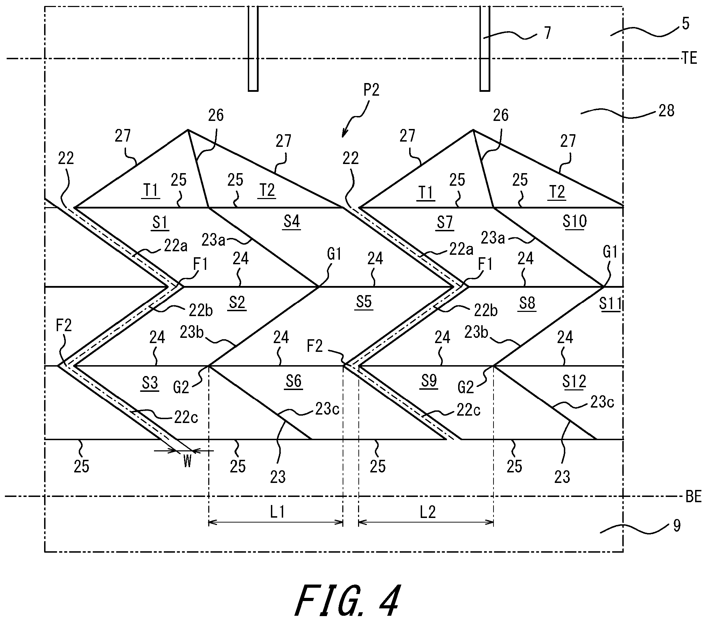

FIG. 4 is a developed view illustrating part of a buttress portion 28 of a tire 20 according to another one of the embodiments of the present invention. In this embodiment, the same components as those in the foregoing embodiment are given the same reference signs, and their description is omitted.

In the buttress portion 28, a ridge line portion 22 extending in a zigzag in the tire radial direction through at least one bending point (two bending points, i.e. a first bending point F1 and a second bending point F2 in order from the tire radial outer side in this embodiment) on the surface of the buttress portion 28 and a valley line portion 23 extending parallel to the ridge line portion 22 in a zigzag at a spacing from the ridge line portion 22 in the tire circumferential direction and located inward from the surface of the buttress portion 28 in the normal direction of the surface (i.e. the direction perpendicular to the paper surface of the drawing). The ridge line portion 22 and the valley line portion 23 are alternately arranged in the tire circumferential direction (at regular spacing in this embodiment). The total number of these line portions is three or more. FIG. 4 illustrates four line portions of a plurality of ridge line portions 22 and valley line portions 23 formed in the buttress portion 28 of the tire 20.

The ridge line portion 22 in this embodiment is made up of a first ridge line portion 22a extending outward in the tire radial direction from the first bending point F1, a second ridge line portion 22b extending between the first bending point F1 and the second bending point F2, and a third ridge line portion 22c extending inward in the tire radial direction from the second bending point F2. The first ridge line portion 22a, the second ridge line portion 22b, and the third ridge line portion 22c have the same length, and have the same inclination angle with respect to the tire circumferential direction.

The valley line portion 23 in this embodiment extends in the tire radial direction through at least one bending point (two bending points, i.e. a first bending point G1 and a second bending point G2 in order from the tire radial outer side in this embodiment), and is made up of a first valley line portion 23a extending outward in the tire radial direction from the first bending point G1, a second valley line portion 23b extending between the first bending point G1 and the second bending point G2, and a third valley line portion 23c extending inward in the tire radial direction from the second bending point G2. The first valley line portion 23a, the second valley line portion 23b, and the third ridge line portion 23c have the same length, and have the same inclination angle with respect to the tire circumferential direction.

The ridge line portion 22 and the valley line portion 23 in this embodiment are parallel to each other in a tire circumferential view, and the centerline of the ridge line portion 22 and the valley line portion 23 have the same shape.

The buttress portion 28 in this embodiment also has a first slanting line portion 24 connecting each of the bending points F1 and F2 of the ridge line portion 22 and each of the bending points G1 and G2 of the valley line portion 23 on the same circumference, and a second slanting line portion 25 connecting the ridge line portion 22 and the valley line portion 23 in parallel with the first slanting line portion 24 at each of a position away from the first slanting line portion 24 outward in the tire radial direction and a position away from the first slanting line portion 24 inward in the tire radial direction (both end positions of each of the ridge line portion 22 and the valley line portion 23 in this embodiment). In this embodiment, the first slanting line portion 24 and the second slanting line portion 25 are parallel to each other, and are linear in a developed view in FIG. 2.

In this embodiment, the second slanting line portion 25 located away from the first slanting line portion 24 on the tire radial outer side inward in the tire radial direction overlaps with the first slanting line portion 24 on the tire radial inner side. Likewise, the second slanting line portion 25 located away from the first slanting line portion 24 on the tire radial inner side outward in the tire radial direction overlaps with the second slanting line portion 24 on the tire radial outer side. Thus, in this embodiment, it is assumed that the second slanting line portion 25 is located only at both end positions of each of the ridge line portion 22 and the valley line portion 23.

Thus, in the buttress portion 28 in this embodiment, the ridge line portion 22 extending in the tire radial direction on the surface of the buttress portion 28, the valley line portion 23 extending in the tire radial direction inward from the surface of the buttress portion 28 in the normal direction of the surface, the first slanting line portion 24 connecting each of the bending points F1 and F2 of the ridge line portion 22 and each of the bending points G1 and G2 of the valley line portion 23 on the same circumference, and the second slanting line portion 25 connecting the ridge line portion 22 and the valley line portion 23 in parallel with the first slanting line portion 24 at both end positions of each of the ridge line portion 22 and the valley line portion 23 define a plurality of slopes S (12 slopes S1 to S12 are illustrated in FIG. 4).

The slopes S1 to S12 are each a slope connecting the ridge line portion 22 and the valley line portion 23 inward from the ridge line portion 22 in the normal direction of the surface of the buttress portion 28. Accordingly, the slopes S1 to S12 are inclined with respect to the surface of the buttress portion 28 from the ridge line portion 22 toward the valley line portion 23 so that its depth from the surface of the buttress portion 28 increases gradually.

In this embodiment, the ridge line portion 22 and the valley line portion 23 are parallel to each other, and the first slanting line portion 24 and the second slanting line portion 25 are parallel to each other, as mentioned above. Therefore, the plurality of slopes S (the slopes S1 to S12 in FIG. 4) in this embodiment are each a parallelogram.

Moreover, in this embodiment, the ridge line portion 22 and the valley line portion 23 are arranged at regular spacing in the tire circumferential direction, and the first slanting line portion 24 and the second slanting line portion 25 are arranged at regular spacing in the tire radial direction. Therefore, the plurality of slopes S (the slopes S1 to S12 in FIG. 4) are congruent.

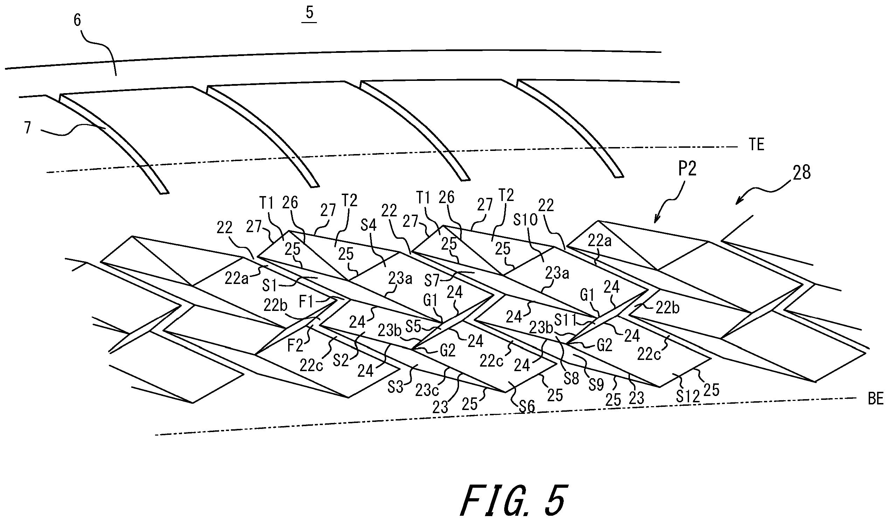

FIG. 5 is a perspective view of the buttress portion 28 in FIG. 4. As illustrated in FIG. 5, each pair of slopes S adjacent in the tire radial direction with the first slanting line portion 24 therebetween form a peak surface or a valley surface. Specifically, on one side in the tire circumferential direction (the left side in the drawing) where the angle between the first ridge line portion 22a and the second ridge line portion 22b extending with the bending point F1 of the ridge line portion 22 therebetween is less than 180°, the slopes S4 and S5 adjacent in the tire radial direction with the first slanting line portion 24 therebetween form a valley surface that is recessed inward in the normal direction of the first slanting line portion 24. On the other side in the tire circumferential direction (the right side in the drawing) where the angle between the first ridge line portion 22a and the second ridge line portion 22b extending with the bending point F1 of the ridge line portion 22 therebetween is more than 180°, the slopes S7 and S8 adjacent in the tire radial direction with the first slanting line portion 24 therebetween form a peak surface that protrudes outward in the normal direction of the first slanting line portion 24.

Likewise, on one side in the tire circumferential direction (the left side in the drawing) where the angle between the first valley line portion 23a and the second valley line portion 23b extending with the bending point G1 of the valley line portion 23 therebetween is less than 180°, the slopes S7 and S8 adjacent in the tire radial direction with the first slanting line portion 24 therebetween form a peak surface that protrudes outward in the normal direction of the first slanting line portion 24. On the other side in the tire circumferential direction (the right side in the drawing) where the angle between the first valley line portion 23a and the second valley line portion 23b extending with the bending point G1 of the valley line portion 23 therebetween is more than 180°, the slopes S10 and S11 adjacent in the tire radial direction with the first slanting line portion 24 therebetween form a valley surface that is recessed inward in the normal direction of the first slanting line portion 24.

Herein, the "normal direction of the first slanting line portion 24" denotes the normal direction of a plane that includes the first slanting line portion 24 and forms the same angle with each of two slopes (e.g. the slopes S4 and S5) adjacent in the tire radial direction with the first slanting line portion 24 therebetween.

The slopes S1 to S12 in FIG. 5 are inclined with respect to the surface of the buttress portion 28 from the ridge line portion 22 toward the valley line portion 23 so that its depth from the surface of the buttress portion 28 increases gradually, as mentioned above. Therefore, the peak surface and the valley surface are equally inclined with respect to the surface of the buttress portion 28 at the inclination angle of the first slanting line portion 24 with respect to the surface of the buttress portion 28.

Thus, in the buttress portion 28 in this embodiment, the peak surface and the valley surface having the foregoing properties alternate in the tire circumferential direction through the ridge line portion 22 and the valley line portion 23.

The ridge line portion 22 in this embodiment is zigzag-shaped, as mentioned above. On one side in the tire circumferential direction where the angle between the first ridge line portion 22a and the second ridge line portion 22b extending with the bending point F1 therebetween is less than 180°, the angle between the second ridge line portion 22b and the third ridge line portion 22c extending with the second bending point F2 therebetween is more than 180°. Thus, in the buttress portion 28 in this embodiment, the peak surface and the valley surface each formed by the slopes S adjacent in the tire radial direction with the first slanting line portion 24 therebetween are sequentially arranged in the tire radial direction.

In this embodiment, the ridge line portion 22 has two bending points F1 and F2, and the peak surface and the valley surface are formed one by one in the tire radial direction. For example, in the case where the ridge line portion has three bending points, the peak surface and the valley surface alternate in the tire radial direction, too.

The effects of the tire 20 according to this embodiment will be described below.

The tire 20 according to this embodiment basically has the same effects as the foregoing tire 10 in which the ridge line portion 12 and the valley line portion 13 each have one bending point F or G. In addition, the tire 20 has more advantageous effects than the tire 10 as follows.

In the tire 20 according to this embodiment, the ridge line portion 22 has two bending points F1 and F2, and the valley line portion 23 has two bending points G1 and G2. Thus, deformation of the buttress portion 28 in the tire radial direction is allowed more favorably, so that noise caused by vibration of the tread portion can be further reduced.

In the tire 20 according to this embodiment, the ridge line portion 22 has two bending points F1 and F2, and the valley line portion 23 has two bending points G1 and G2. Hence, deformation of the buttress portion 28 in the tire circumferential direction is further suppressed, and distortion of the buttress portion 28 during vehicle running is further prevented. This further enhances the driving and braking performance of the tire.

In terms of suppressing deformation of the buttress portion 28 in the tire circumferential direction more sufficiently to further ensure the foregoing multiple effects, the tire circumferential width W (see FIG. 4) of the ridge line portion 22 is preferably 1.8 mm or more.

In the tire 20 according to this embodiment, the ridge line portion 22 has two bending points F1 and F2, and the valley line portion 23 has two bending points G1 and G2. Hence, tread strain due to out-of-plane bending deformation during tire ground contact can be alleviated more sufficiently, and the wear resistance performance of the tread can be improved.

In terms of further ensuring the foregoing multiple effects, the depth of the valley line portion 23 is preferably 0.2 mm or more and 1.0 mm or less. If the depth of the valley line portion 23 is 0.2 mm or more, deformation of the buttress portion 28 can be allowed favorably. If the depth of the valley line portion 23 is 1.0 mm or less, an excessive decrease of the rigidity of the buttress portion 28 can be prevented. The "depth of the valley line portion 23" herein is the distance from the surface of the buttress portion 28 to the valley line portion 23 along the normal direction of the surface of the buttress portion 28.

In terms of further ensuring the foregoing multiple effects, the clearance distance between the ridge line portion 22 and the valley line portion 23 is preferably 3 mm or more and 10 mm or less, and the clearance distance between the first slanting line portion 24 and the second slanting line portion 25 is preferably 3 mm or more and 9 mm or less.

Preferably, in the tire 20 according to this embodiment, the ridge line portion 22 and the valley line portion 23 respectively have two bending points F1 and F2 and two bending points G1 and G2, and the distance between the slanting line portions (the first slanting line portion 24 and the second slanting line portion 25 in this embodiment) is equal.

With this structure, deformation of the buttress portion 28 in the tire radial direction is allowed more favorably, so that noise caused by vibration of the tread portion can be further reduced, and the crack growth suppression effect, the driving and braking performance improving effect, and the wear resistance performance improving effect can be further ensured.

Preferably, in the tire 20 according to this embodiment, the recess P2 is formed annularly around the circumference of the buttress portion 28.

With this structure, deformation of the buttress portion 28 in the tire radial direction is ensured on the whole tire circumference, and accordingly noise caused by vibration of the tread portion can be further reduced.

Moreover, deformation of the buttress portion 28 in the tire circumferential direction is further suppressed, and distortion of the buttress portion 28 is further prevented. This further enhances the driving and braking performance of the tire.

Preferably, in the tire 20 according to this embodiment, in the case where the recess P2 is formed only in the buttress portion 28 on one side, the tire is preferably installed on the vehicle so that the recess P2 is located on the inner side.

The buttress portion 28 on the inner side in the vehicle-installed state is closer to the vehicle body than the buttress portion 28 on the outer side in the vehicle-installed state, and also the rigidity of the wheel is lower on the inner side than on the outer side in the vehicle-installed state. Due to such circumstances, the buttress portion 28 on the inner side in the vehicle-installed state vibrates more easily. By forming the recess P2 in the buttress portion 28 on the inner side in the vehicle-installed state, noise caused by vibration of the tread portion can be reduced more effectively.

In terms of further reducing noise caused by vibration of the tread portion, the recess P2 is preferably formed in both buttresses 28.

Preferably, in the tire 20 according to this embodiment, the proportion of the area of the recess P2 to the surface area of the buttress portion 28 is 50 % or more.

With this structure, quietness can be further improved.

The surface area of the buttress portion 28 and the area of the recess P2 are measured in a developed view of the buttress portion 28.

In the buttress portion 28 of the tire 20 according to this embodiment, on the tire circumferential outer side of the valley line portion 23, triangular auxiliary slopes T1 and T2 are formed by the second slanting line portion 25 connecting the tire radial outer edge of the valley line portion 23 and the tire radial outer edge of the ridge line portion 22, a third slanting line portion 26 extending outward in the tire radial direction from the tire radial outer edge of the valley line portion 23, and a contour line portion 27 connecting the tire radial outer edge of the third slanting line portion 26 and the tire radial outer edge of the ridge line portion 22.

The third slanting line portion 26 has the same depth as the valley line portion 23 at the position of the tire radial inner edge, and connects to the surface of the buttress portion 8 at the position of the tire radial outer edge. Accordingly, the auxiliary slopes T1 and T2 in this embodiment are inclined with respect to the surface of the buttress portion 28 from the contour line portion 27 toward the tire radial inner edge of the third slanting line portion 26 so that its depth from the surface of the buttress portion 28 increases gradually. Thus, in this embodiment, the auxiliary slopes T1 and T2 adjacent in the tire circumferential direction with the third slanting line portion 26 therebetween form a valley surface.

Such an optional structure may be provided on the tire radial outer side and/or inner side of the ridge line portion 22 and the valley line portion 23. With this structure, the recess P2 can be formed in various patterns while ensuring anti-noise performance, driving and braking performance, etc.

In the perspective view in FIG. 5, a smooth slope connects the valley line portion 23 at the depth position and the surface of the buttress portion 28 on the tire radial inner side of the second slanting line portion 25 on the buttress edge BE side, although not illustrated because it is a curve.

For example, the tires 10 and 20 described above each include: a pair of bead cores 1; a carcass 2 toroidally extending between the bead cores 1; and a belt 3 (composed of two inclined belt layers 3a and 3b obtained by rubber-coating a plurality of cords extending at an inclination with respect to the tire circumferential direction and one circumferential belt layer 3c obtained by rubber-coating a plurality of cords extending in the tire circumferential direction in this embodiment) located on the tire radial outer side of the carcass 2, as illustrated in FIG. 1. A tread 5a located on the tire radial outer side of the belt 2 has, on one side and the other side of the tire equator CL in the tire radial direction, a pair of circumferential grooves 6 continuously extending in the tire circumferential direction and a plurality of sipes 7 connecting the pair of circumferential grooves 6 to the corresponding tread edges TE. The basic structure of the tire and the structure of the tread portion 5 has its features in the structure of the buttress portion 8 as described above.

### EXAMPLES

Examples according to the present invention will be described below.

Example tires and Comparative Example tires (tire size of all tires: 215/45R17) were produced according to the specifications listed in Table 1, and subjected to the below-described tests.

Example tire 1 has the structure illustrated in FIGS. 1 to 3. That is, Example tire 1 has the recess P1 having V-shaped ridge line portions and valley line portions in the buttress portion 8.

Comparative Example tire 1 is the same as Example tire 1, except that it does not have the recess P1 in the buttress portion.

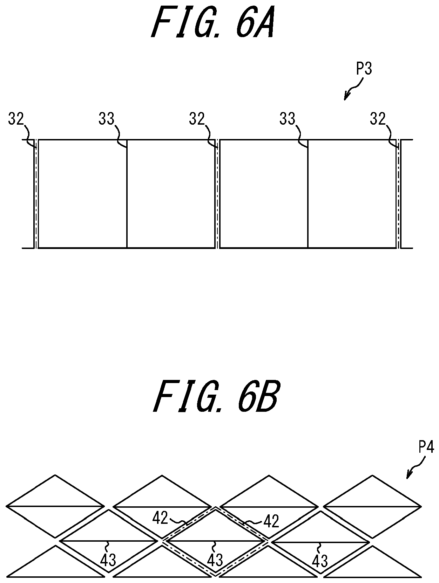

Comparative Example tire 2 is the same as Example tire 1, except that it has a recess P3 schematically illustrated in FIG. 6A in the buttress portion. The recess P3 has a ridge line portion 32 linearly extending in the tire radial direction and a valley line portion 33 linearly extending in the tire radial direction in a developed view of the buttress portion, without slanting line portions.

Comparative Example tire 3 is the same as Example tire 1, except that it has a recess P4 schematically illustrated in FIG. 6B in the buttress portion. The recess P4 has a rhombic contour enclosed by two ridge line portions 42 each extending in the tire radial direction through one bending point, and has a valley line portion 43 connecting the bending points of the two ridge line portions 62 in the tire circumferential direction, in a developed view of the buttress portion. Hence, in the recess P4, the ridge line portions 42 and the valley line portion 43 form two triangular slopes, and the valley line portion 43 is continuous in the tire circumferential direction.

Example tire 2 has the structure illustrated in FIGS. 4 to 5. That is, Example tire 2 has the recess P2 having zigzag-shaped ridge line portions and valley line portions in the buttress portion 28.

Example tires 3 and 4 are the same as Example tire 2, except that the inclination angle of the ridge line portion 22 and the valley line portion 23 forming the recess P2 with respect to the tire radial direction, the inclination angle of the slanting line portion 24 with respect to the tire circumferential direction, and/or the depth of the valley line portion 23 is different.

Example tire 5 is the same as Example tire 2, except that the number of ridge line portions 22 and valley line portion 23 is different.

In Table 1, the "inclination angle of slanting line portion" is the inclination angle of the first slanting line portion 14 with respect to the tire circumferential direction in the foregoing embodiment. In FIGS. 1 to 5, the inclination angle is 0°.

The "inclination angle of ridge line portion and valley line portion" is the inclination angle of the ridge line portion and the valley line portion with respect to the tire radial direction, namely, the inclination angles α1 and α2 and the inclination angles β1 and β2 in FIG. 2.

**Table 1**

| | Shape of ridge line portion | Shape of valley line portion | Number of bending points of ridge line portion | Number of bending points of valley line portion | Inclination angle of slanting line portion (°) | Inclination angle of ridge line portion and valley line portion (°) | Depth of valley line portion (mm) | Anti-noise performance | Crack growth suppression performance | Braking performance |
|---|---|---|---|---|---|---|---|---|---|---|
| Comparative Example tire 1 | - | - | - | - | - | - | - | 8 | 8 | 8 |
| Comparative Example tire 2 | Linear | Linear | 0 | 0 | - | 0 | 0.3 | 9 | 7 | 6 |
| Comparative Example tire 3 | V-shaped | Linear | 1 | 0 | 0 | 65 | 0.3 | 9 | 7 | 7 |
| Example tire 1 | V-shaped | | 1 | 1 | 0 | 65 | 0.3 | 16 | 9 | 16 |
| Example tire 2 | Zigzag | | 2 | 2 | 0 | 65 | 0.3 | 18 | 9 | 15 |
| Example tire 3 | Zigzag | | 2 | 2 | 0 | 65 | 0.1 | 13 | 10 | 10 |
| Example tire 4 | Zigzag | | 2 | 2 | 0 | 65 | 0.7 | 20 | 8 | 9 |
| Example tire 5 | Zigzag | | 3 | 3 | 0 | 65 | 0.3 | 19 | 8 | 9 |

### (Anti-noise performance)

Each sample tire was attached to a rim 7.0Jx17 to form a tire wheel, filled to an air pressure of 230 kPa (equivalent pressure), and installed on a passenger vehicle. Noise perceived when running on each of three types of road surfaces different in road surface roughness was evaluated. An average value of results evaluated in 20 levels with the noise of Comparative Example tire 1 being set to 8 is shown in Table 1. A larger value indicates better anti-noise performance.

### (Crack growth suppression performance)

Each sample tire was attached to a rim 7.0Jx17, filled to an air pressure of 100 kPa (equivalent pressure), and, under a load of 6.4 kN, run on an indoor drum for 10000 km.

Results were evaluated in 20 levels, with the amount of cracks (total crack length) of Comparative Example tire 1 being set to 8. A larger value indicates better crack growth suppression performance.

### (Braking performance)

Each sample tire was attached to a rim 7.0Jx17 to form a tire wheel, filled to an air pressure of 230 kPa (equivalent pressure), and installed on a passenger vehicle. The braking distance from running at 100 km/h to stop was measured. The measurement was performed ten times, and an average value was used as an index.

Since a distortion phenomenon of a buttress portion is the same during driving and during braking, the braking performance was tested and evaluated. A larger value indicates better braking performance.

### REFERENCE SIGNS LIST

1 bead core
2 carcass
3 belt
3a, 3b inclined belt layer
3c circumferential belt layer
5 tread portion
5a tread
6 circumferential groove
7 sipe
8, 28 buttress portion
9 sidewall portion
10, 20 tire
12, 22, 32, 42 ridge line portion
12a, 22a first ridge line portion
12b, 22b second ridge line portion
12c, 22c third ridge line portion
13, 23, 33, 43 valley line portion
13a, 23a first valley line portion
13b, 23b second valley line portion
13c, 23c third valley line portion
14, 24 slanting line portion (first slanting line portion)
15, 25 slanting line portion (second slanting line portion)
26 third slanting line portion
27 contour line portion
BE buttress edge
L1 tire circumferential length of ridge line portion or valley line portion on one side in tire circumferential direction
L2 tire circumferential length of ridge line portion or valley line portion on the other side in tire circumferential direction
S, S1 to S24 slope
T1, T2 auxiliary slope
TE tread edge

## Claims

1. A tire (10, 20) comprising
a buttress portion (8, 28) between a tread portion (5) and a sidewall portion (9) thereof,
wherein a ridge line portion (12, 22) extending in a tire radial direction through at least one bending point (F, F1, F2) on a surface of the buttress portion (8, 28) and a valley line portion (13, 23) extending parallel to the ridge line portion (12, 22) at a spacing from the ridge line portion (12, 22) in a tire circumferential direction and located inward from the surface of the buttress portion (8, 28) in a normal direction of the surface, the ridge line portion (12, 22) and the valley line portion (13, 23) alternately arranged in the tire circumferential direction, a total number of the ridge line portion (12, 22) and the valley line portion (13, 23) being three or more, and
a first slanting line portion (14, 24) connects the bending point (F, F1, F2) of the ridge line portion (12, 22) and a bending point (G, G1, G2) of the valley line portion (13, 23) on a same circumference, and a second slanting line portion (15, 25) connects the ridge line portion (12, 22) and the valley line portion (13, 23) in parallel with the first slanting line portion (14, 24) at each of a position away from the first slanting line portion (14, 24) outward in the tire radial direction and a position away from the first slanting line portion (14, 24) inward in the tire radial direction.

2. The tire (10, 20) according to claim 1, wherein the ridge line portion (12, 22) and the valley line portion (13, 23) each have one bending point (F, F1, F2, G, G1, G2), and a distance between the first slanting line portion (14, 24) and the second slanting line portion (15, 25) is equal.

3. The tire (10, 20) according to claim 1, wherein the ridge line portion (12, 22) and the valley line portion (13, 23) each have at least two bending points (F, F1, F2, G, G1, G2), and a distance between the first slanting line portion (14, 24) and the second slanting line portion (15, 25) is equal.

4. The tire (10, 20) according to any one of claims 1 to 3, wherein at least four slopes (S) each in a parallelogram shape are defined by the ridge line portion (12, 22), the valley line portion (13, 23), the first slanting line portion (14, 24), and the second slanting line portion (15, 25).

5. The tire (10, 20) according to claim 4, wherein the at least four slopes (S) are congruent.

## Patentansprüche

1. Reifen (10, 20), der Folgendes umfasst:
einen Stützabschnitt (8, 28) zwischen einem Laufflächenabschnitt (5) und einem Seitenwandabschnitt (9) davon,
wobei ein Kammlinienabschnitt (12, 22) sich in einer radialen Richtung des Reifens durch mindestens einen Biegepunkt (F, F1, F2) auf einer Oberfläche des Stützabschnitts (8, 28) erstreckt und ein Tallinienabschnitt (13, 23) sich parallel zum Kammlinienabschnitt (12, 22) in einem Abstand vom Kammlinienabschnitt (12, 22) in einer Umfangsrichtung des Reifens erstreckt und sich einwärts von der Oberfläche des Stützabschnitts (8, 28) in einer normalen Richtung der Oberfläche befindet, wobei der Kammlinienabschnitt (12, 22) und der Tallinienabschnitt (13, 23) abwechselnd in der Umfangsrichtung des Reifens angeordnet sind, wobei eine Gesamtzahl des Kammlinienabschnitts (12, 22) und des Tallinienabschnitts (13, 23) drei oder mehr beträgt, und
ein erster Schräglinienabschnitt (14, 24) den Biegepunkt (F, F1, F2) des Kammlinienabschnitts (12, 22) und einen Biegepunkt (G, G1, G2) des Tallinienabschnitts (13, 23) auf demselben Umfang verbindet, und ein zweiter Schräglinienabschnitt (15, 25) den Kammlinienabschnitt (12, 22) und den Tallinienabschnitt (13, 23) parallel zum ersten Schräglinienabschnitt (14, 24) jeweils an einer Position entfernt vom ersten Schräglinienabschnitt (14, 24) auswärts in der radialen Richtung des Reifens und an einer Position entfernt vom ersten Schräglinienabschnitt (14, 24) einwärts in der radialen Richtung des Reifens verbindet.

2. Reifen (10, 20) nach Anspruch 1, wobei der Kammlinienabschnitt (12, 22) und der Tallinienabschnitt (13, 23) jeweils einen Biegepunkt (F, F1, F2, G, G1, G2) aufweisen, und ein Abstand zwischen dem ersten Schräglinienabschnitt (14, 24) und dem zweiten Schräglinienabschnitt (15, 25) gleich ist.

3. Reifen (10, 20) nach Anspruch 1, wobei der Kammlinienabschnitt (12, 22) und der Tallinienabschnitt (13, 23) jeweils mindestens zwei Biegepunkte (F, F1, F2, G, G1, G2) aufweisen, und ein Abstand zwischen dem ersten Schräglinienabschnitt (14, 24) und dem zweiten Schräglinienabschnitt (15, 25) gleich ist.

4. Reifen (10, 20) nach einem der Ansprüche 1 bis 3, wobei mindestens vier Neigungen (S) jeweils in Form eines Parallelogramms durch den Kammlinienabschnitt (12, 22), den Tallinienabschnitt (13, 23), den ersten Schräglinienabschnitt (14, 24) und den zweiten Schräglinienabschnitt (15, 25) definiert sind.

5. Reifen (10, 20) nach Anspruch 4, wobei die mindestens vier Neigungen (S) kongruent sind.

## Revendications

1. Pneumatique (10, 20), comprenant :
une partie de contrefort (8, 28) entre une partie de bande de roulement (5) et une partie de paroi latérale (9) de celle-ci,
dans lequel une partie de ligne de crête (12, 22) s'étendant dans une direction radiale du pneumatique à travers au moins un point de flexion (F, F1, F2) sur une surface de la partie de contrefort (8, 28) et une partie de ligne de creux (13, 23) s'étendant parallèlement à la partie de ligne de crête (12, 22), à un espacement de la partie de ligne de crête (12, 22) dans une direction circonférentielle du pneumatique, et située vers l'intérieur depuis la surface de la partie de contrefort (8, 28), dans une direction normale de la surface, la partie de ligne de crête (12, 22) et la partie de ligne de creux (13, 23) étant disposées en alternance dans la direction circonférentielle du pneumatique, un nombre total de la partie de ligne de crête (12, 22) et de la partie de ligne de creux (13, 23) correspondant à trois ou plus, et
une première partie de ligne inclinée (14, 24) relie le point de flexion (F, F1, F2) de la partie de ligne de crête (12, 22) et un point de flexion (G, G1, G2) de la partie de ligne de creux (13, 23) sur une même circonférence, et une deuxième partie de ligne inclinée (15, 25) relie la partie de ligne de crête (12, 22) et la partie de ligne de creux (13, 23) parallèlement à la première partie de ligne inclinée (14, 24) à chacune d'une position éloignée de la première partie de ligne inclinée (14, 24) vers l'extérieur, dans la direction radiale du pneumatique, et d'une position éloignée de la première partie de ligne inclinée (14, 24) vers l'intérieur, dans la direction radiale du pneumatique.

2. Pneumatique (10, 20) selon la revendication 1, dans lequel la partie de ligne de crête (12, 22) et la partie de ligne de creux (13, 23) comportent chacune un point de flexion (F, F1, F2, G, G1, G2), et une distance ente la première partie de ligne inclinée (14, 24) et la deuxième partie de ligne inclinée (15, 25) est égale.

3. Pneumatique (10, 20) selon la revendication 1, dans lequel la partie de ligne de crête (12, 22) et la partie de ligne de creux (13, 23) comportent chacune au moins deux points de flexion (F, F1, F2, G, G1, G2), et une distance entre la première partie de ligne inclinée (14, 24) et la deuxième partie de ligne inclinée (15, 25) est égale.

4. Pneumatique (10, 20) selon l'une quelconque des revendications 1 à 3, dans lequel au moins quatre pentes (S), chacune en forme de parallélogramme, sont définies par la partie de ligne de crête (12, 22), la partie de ligne de creux (13, 23), la première partie de ligne inclinée (14, 24) et la deuxième partie de ligne inclinée (15, 25).

5. Pneumatique (10, 20) selon la revendication 4, dans lequel les au moins quatre pentes (S) sont congruentes.
